# EUROPÄISCHE PATENTSCHRIFT

(11) **EP 1 945 339 B1**
(45) Veröffentlichungstag und Bekanntmachung des Hinweises auf die Patenterteilung: **18.02.2009**
(21) Anmeldenummer: 06752580.8
(22) Anmeldetag: 27.06.2006
(51) Int. Cl.: B01F 15/02, B28C 5/42

(54) **TROMMELMISCHER**
DRUM MIXER
MELANGEUR A TAMBOUR

(30) Priorität: 12.07.2005 AT 4742005 U
(43) Veröffentlichungstag der Anmeldung: 23.07.2008
(73) Patentinhaber: Himmelfreundpointer, Kurt, 4612 Scharten (AT)
(72) Erfinder: Himmelfreundpointer, Kurt, 4612 Scharten (AT)
(86) Internationale Anmeldenummer: PCT/AT2006/000264
(87) Internationale Veröffentlichungsnummer: WO 2007/022551

(56) Entgegenhaltungen:
- DE-A1- 3 331 314
- DE-A1- 3 433 276
- DE-A1- 4 303 584
- US-A- 1 801 162

## Beschreibung

Die Erfindung betrifft einen Trommelmischer mit einer auf einem Gestell drehbar gelagerten Trommel für ein Mischgut und mit einem Antrieb zum Drehen der Trommel um deren Drehachse, wobei eine Entnahmeleitung vorgesehen ist, die von einer stirnseitigen Befüllöffnung der Trommel aus mit ihrer Entnahmeöffnung Mischgut der Trommel aufnimmt.

Um Mischgut eines Trommelmischers auch während des Mischens entnehmen zu können, ist es aus dem Stand der Technik bekannt (US 5 249 860 A und DE-A-3331314), einer in die Trommel ragenden Entnahmeleitung Mischgut zuzuführen, wobei die Entnahmeleitung nach oben offen ist und eine Schnecke aufweist. Nachteilig bei derartigen Vorrichtungen ist, daß die Trommel durch die Mischelemente in Mischkammern unterteilt ist, da die Mischelemente auf der Trommelseitenwand Mischgut auf die Entnahmeleitung fördern müssen, so daß ein gleichmäßiges Durchmischen des Mischguts nicht gewährleistet werden kann, was insbesondere die Verwendung solcher Trommelmischer bei schwer zu mischendem Mischgut ausschließt. Hinzu kommt, daß die Mischelemente mit ihren zusätzlichen Eigenschaften zur Förderung von Mischgut vergleichsweise robust ausgeführt werden müssen, was einen hohen konstruktiven Aufwand erfordert.

Es ist daher Aufgabe der Erfindung, einen Trommelmischer der eingangs geschilderten Art auf einfache konstruktive Weise derart auszugestalten, daß auch bei schwer zu mischenden Mischgut eine Entnahme an gleichmäßig durchmischtem Mischgut gewährleistet werden kann.

Die Erfindung löst die gestellte Aufgabe dadurch, daß eine mit dem Gestell verbundene Abstützung vorgesehen ist, die innerhalb der Trommel mit der in das Mischgut der Trommel ragenden Entnahmeleitung zumindest bereichsweise kraftabtragend, insbesondere starr, verbunden ist.

Ist eine mit dem Gestell verbundene Abstützung vorgesehen, die innerhalb der Trommel mit der in das Mischgut der Trommel ragenden Entnahmeleitung zumindest bereichsweise kraftabtragend verbunden ist, so kann auch bei hohen Mischkräften auf die Entnahmeleitung für eine ausreichende Abstützung der Entnahmeleitung gesorgt werden. Es ist somit auch möglich, daß die Entnahmeleitung in das Mischgut der Trommel auch während des Mischens ragen kann, womit im Gegensatz zum Stand der Technik die Trommel in Mischkammern nicht unterteilt werden muß, da Mischelemente zum Förderern des Mischguts nicht vorgesehen werden müssen. Somit kann auch schwer zu mischendes Mischgut vom Trommelmischer verarbeitet werden, was den Trommelmischer besonders auszeichnet. Hinzu kommt, daß mit dem Vernachlässigen von robust ausgeführten Mischelementen einfache konstruktive Verhältnisse geschafften werden, so daß der erfindungsgemäße Mischer besonders kostengünstig herzustellen ist.

Einfache Konstruktionsverhältnisse ergeben sich, wenn die rohrförmige, im wesentlichen entlang der Drehachse der Trommel verlaufende Abstützung einerseits mit dem Gestell verbunden und andererseits auf der Befüllöffnung gegenüberliegenden Innenseite der Trommel drehbar gelagert ist. Damit können Mischkräfte auf die Entnahmeleitung über die Trommel abgetragen werden, was den konstruktiven Aufwand der Abstützung vermindert.

Zur Verringerung des konstruktiven Aufwands hinsichtlich der Festigkeit der Entnahmeleitung kann die Entnahmeleitung im Bereich der Entnahmeöffnung starr mit der Abstützung verbunden sein, so daß gerade die Mischkräfte von der Entnahmeleitung abgetragen werden können, die die Entnahmeleitung mechanisch am stärksten beanspruchen.

Ragt die das Mischgut ansaugende bzw. fördernde Entnahmeleitung mit ihrer Entnahmeöffnung in den unteren Bereich der Trommel, so ergeben sich damit einfache konstruktive Verhältnisse, um die Trommel entleeren zu können.

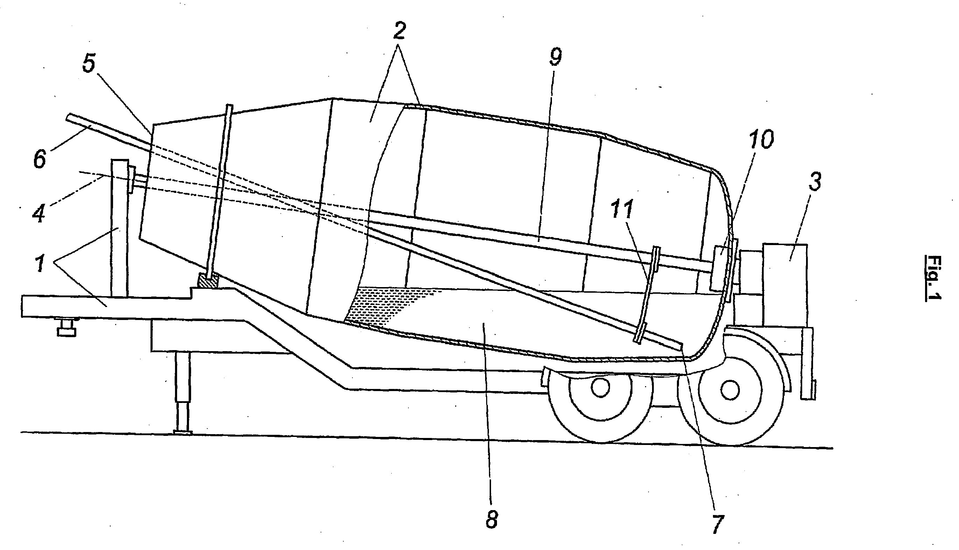

In der Zeichnung ist der Erfindungsgegenstand beispielsweise anhand eines Ausführungsbeispiels dargestellt. Es wird eine teilweise aufgerissene Seitenansicht des erfindungsgemäßen Trommelmischers gezeigt.

Gemäß dem dargestellten Ausführungsbeispiel weist der Trommelmischer eine auf einem Gestell 1 drehbar gelagerte Trommel 2 auf, wobei das Gestell 1 als fahrbare Lafette ausgebildet ist. Die Trommel 1 ist mit einem Antrieb 3 verbunden, der die Trommel 2 um eine zur Horizontalen geneigt verlaufenden Drehachse 4 bewegt. In die Trommel 2 ragt von einer stirnseitigen Befüllöffnung 5 der Trommel 2 eine Entnahmeleitung 6 mit ihrer Entnahmeöffnung 7 in das Mischgut 8, um so das Mischgut 8 der Trommel 2 entnehmen zu können. In der Trommel 2 verläuft eine mit dem Gestell 1 verbundene Abstützung 9, die mit der Entnahmeleitung 6 innerhalb der Trommel 2 starr verbunden ist. Damit kann im Gegensatz zum Stand der Technik die Entnahmeleitung 6 verläßlich in das Mischgut 8 der Trommel 2 gehalten werden, ohne daß eine Entnahmeleitung 6 mit hoher Biegesteifigkeit verwendet werden muß. Neben einem verringerten Konstruktionsaufwand für die Entnahmeleitung 6 kann so auch sichergestellt werden, daß die Entnahmeleitung 6 bei verschiedensten Trommeldrehzahlen verläßlich gleichmäßig durchmischtes Mischgut 8 entnehmen kann, weil die Kräfte durch die Mischbewegungen des Mischguts 8 größtenteils von der Abstützung 9 abgetragen werden.

Ein Ende der rohrförmigen Abstützung 9 ist auf der Befüllöffnung 5 gegenüberliegenden Innenseite der Trommel 2 drehbar in ein Trommellager 10 eingesetzt, wobei für eine konstruktive Einfachheit die Abstützung 9 innerhalb der Trommel 2 im wesentlichen entlang der Drehachse 4 der Trommel 2 verläuft. Das anderen Ende der rohrförmigen Abstützung 9 ist mit dem Gestell 1 fest verbunden, insbesondere verschweißt.

Die Entnahmeleitung 6 ist im Bereich der Entnahmeöffnung 7 starr mit der Abstützung 9 verbunden, und zwar bildet die Abstützung 9 hiefür ein biegesteifes Halteelement 11 aus, das mit der Entnahmeleitung 6 verschweißt ist. Damit kann die Entnahmeöffnung 7 positionsgenau in das Mischgut 8 der Trommel 2 gehalten werden kann. Es ist aber auch vorstellbar hydraulische Stellzylinder anstatt des Halteelements 11 vorzusehen, was nicht näher dargestellt ist, um so die Entnahmeleitung 6 in ihrer Lage innerhalb der Trommel 2 verändern zu können.

Die Entnahmeleitung 6 ragt mit ihrer Entnahmeöffnung 7 in den unteren Bereich der Trommel 2, wobei die Entnahmeleitung 6 das Mischgut 2 entweder mir einer Pumpe und/oder einer Schnecke ansaugen bzw. fördern kann, ohne auf die Trommeldrehzahl für ein gleichmäßiges Mischen des Mischguts 8 Rücksicht nehmen zu müssen.

## Patentansprüche

1. Trommelmischer mit einer auf einem Gestell drehbar gelagerten Trommel für ein Mischgut und mit einem Antrieb zum Drehen der Trommel um ihre Drehachse, wobei eine Entnahmeleitung vorgesehen ist, die von einer stirnseitigen Befüllöffnung der Trommel aus mit ihrer Entnahmeöffnung Mischgut der Trommel aufnimmt, **dadurch gekennzeichnet, daß** eine mit dem Gestell (1) verbundene Abstützung (9) vorgesehen ist, die innerhalb der Trommel (2) mit der in das Mischgut (8) der Trommel (2) ragenden Entnahmeleitung (6) zumindest bereichsweise kraftabtragend, insbesondere starr, verbunden ist.

2. Trommelmischer nach Anspruch 1, **dadurch gekennzeichnet, daß** die rohrförmige, im wesentlichen entlang der Drehachse (4) der Trommel (2) verlaufende Abstützung (9) einerseits mit dem Gestell (1) verbunden und andererseits auf der Befüllöffnung (5) gegenüberliegenden Innenseite der Trommel (2) drehbar gelagert ist.

3. Trommelmischer nach Anspruch 1 oder 2, **dadurch gekennzeichnet, daß** die Entnahmeleitung (6) im Bereich der Entnahmeöffnung (7) starr mit der Abstützung (9) verbunden ist.

4. Trommelmischer nach Anspruch 1, 2 oder 3, **dadurch gekennzeichnet, daß** die das Mischgut (8) ansaugende bzw. fördernde Entnahmeleitung (6) mit ihrer Entnahmeöffnung (7) in den unteren Bereich der Trommel (2) ragt.

## Claims

1. Drum mixer with a drum for a mixable material, which drum is mounted rotatably on a stand, and with a drive for rotating the drum about its axis of rotation, with an extraction line being provided, which receives mixable material from the drum by its extraction opening from an end-face filling opening of the drum, **characterised in that** a support (9) is provided which is connected to the stand (1) and is connected at least in parts load-bearingly, in particular rigidly, within the drum (2) to the extraction line (6), which projects into the mixable material (8) of the drum (2).

2. Drum mixer according to Claim 1, **characterised in that** the tubular support (9), which extends essentially along the axis (4) of rotation of the drum (2), is connected on one side to the stand (1) and is rotatably mounted on the other side on the inner side of the drum (2) which is opposite the filling opening (5).

3. Drum mixer according to Claim 1 or 2, **characterised in that** the extraction line (6) is connected rigidly to the support (9) in the region of the extraction opening (7).

4. Drum mixer according to Claim 1, 2 or 3, **characterised in that** the extraction line (6) which extracts and delivers the mixable material (8) projects with its extraction opening (7) into the lower region of the drum (2).

## Revendications

1. Mélangeur à tambour, équipé d'un tambour rotatif sur palier pour le produit à mélanger et d'un entraînement pour la rotation du tambour autour de son axe de rotation, montés sur un bâti, une conduite d'évacuation du produit de mélange étant prévue pour évacuer celui-ci par l'orifice de remplissage frontal du tambour, à travers l'orifice d'évacuation de la conduite, **caractérisé en ce qu'**un support (9) relié au bâti (1) soit prévu en étant relié à l'intérieur du tambour (2), d'une façon particulièrement rigide et d'une manière à éliminer les forces à certains endroits, à la conduite d'évacuation (6), qui avance dans le produit à mélanger (8) du tambour (2).

2. Mélangeur à tambour selon la revendication 1, **caractérisé en ce que** le support tubulaire (9), qui longe essentiellement l'axe de rotation (4) du tambour (2), soit relié d'une part avec le bâti (1) et qu'il soit d'autre part monté sur palier rotatif à la face interne"dû tambour (2), située à l'opposé de l'orifice de remplissage (5).

3. Mélangeur à tambour selon la revendication 1 ou 2, **caractérisé en ce que** la conduite d'évacuation (6) soit reliée de façon rigide avec le support (9) près de l'orifice d'évacuation (7).

4. Mélangeur à tambour selon la revendication 1, 2 ou 3, **caractérisé en ce que** la conduite d'évacuation (6) qui aspire ou encore qui transfère le produit de mélange (8), avance avec son orifice d'évacuation (7) dans la partie inférieure du tambour (2).
